(19) Europäisches Patentamt
European Patent Office
Office européen des brevets

(11) **EP 4 565 633 B1**

(12) **EUROPEAN PATENT SPECIFICATION**

(45) Date of publication and mention
of the grant of the patent:
**08.07.2026  Bulletin 2026/28**

(21) Application number: **23751010.2**

(22) Date of filing: **01.08.2023**

(51) International Patent Classification (IPC):
*C08G 18/02* (2006.01)  *C08G 18/08* (2006.01)
*C08G 18/12* (2006.01)  *C08G 18/32* (2006.01)
*C08G 18/38* (2006.01)  *C08G 18/42* (2006.01)
*C08G 18/72* (2006.01)  *C08G 18/73* (2006.01)
*C08G 18/75* (2006.01)  *C08G 18/79* (2006.01)
*C08G 18/80* (2006.01)  *C09J 175/06* (2006.01)

(52) Cooperative Patent Classification (CPC):
(C-Sets available)
C08G 18/12; C08G 18/027; C08G 18/0828;
C08G 18/0866; C08G 18/3206; C08G 18/3857;
C08G 18/4202; C08G 18/4238; C08G 18/722;
C08G 18/73; C08G 18/755; C08G 18/798;
C08G 18/8016                          (Cont.)

(86) International application number:
**PCT/EP2023/071265**

(87) International publication number:
**WO 2024/028308 (08.02.2024 Gazette 2024/06)**

(54) **ADHESIVE COMPOSITION, THE PREPARATION METHOD AND USE THEREOF**

KLEBSTOFFZUSAMMENSETZUNG, HERSTELLUNGSVERFAHREN UND VERWENDUNG DAVON

COMPOSITION ADHÉSIVE, SON PROCÉDÉ DE PRÉPARATION ET SON UTILISATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **03.08.2022  CN 202210929870
13.09.2022  EP 22195292**

(43) Date of publication of application:
**11.06.2025  Bulletin 2025/24**

(73) Proprietor: **Covestro Deutschland AG
51373 Leverkusen (DE)**

(72) Inventors:
• **XU, Wen
Shanghai 201315 (CN)**
• **SHAO, Weijia
Shanghai 200081 (CN)**
• **XU, Shunping
Shanghai 201317 (CN)**
• **FAN, Zhirong
40764 Langenfeld (DE)**
• **LI, Yingjun
Shanghai 200438 (CN)**
• **LIU, Hao
Shanghai 200123 (CN)**

(74) Representative: **Levpat
c/o Covestro AG
Gebäude K12
51365 Leverkusen (DE)**

(56) References cited:
**US-A1- 2021 269 670**

(52) Cooperative Patent Classification (CPC): (Cont.)

C-Sets
**C08G 18/12, C08G 18/798;**
**C08G 18/12, C08G 18/8016**

# EP 4 565 633 B1

## Description

### Technical Field

The present invention relates to an adhesive composition, the preparation and use thereof, and an article obtained by bonding with the composition.

### Prior Art

Polyurethane adhesives have excellent bond strength, which is mainly due to the physical bonding force generated by the close contact between the adhesive and the substrate, and wherein the bonding force is further enhanced by the hydrogen bonding of the polyurethane on the substrate.

Aqueous polyurethane dispersions are already widely used in industry, for example in the furniture industry, the automotive industry, the footwear industry or the textile industry for producing composite fibers. Especially in the automobile industry, it is desired to develop a composition, which forms a coating with good resistance to high temperature and high humidity, in order to prevent adhesive failure and significant decrease in peel strength after being subjected to high temperature and high humidity.

After the adhesive comprising an aqueous polyester polyurethane dispersion is applied onto a substrate, dried and cooled, the adhesive forms a non-tacky film-forming product on the substrate, which is thermally activated to impart adhesion. Thermal activation means that the aqueous polyurethane dispersion is melted and activated at a certain temperature (such as in a hot drying tunnel or by means of infrared radiation) and immediately cooled, and the polyester chain segments of the aqueous polyurethane dispersion begin to recrystallize, thereby the adhesive force of the adhesive rapidly reaches a high level. Usually, it is used in combination with a crosslinking agent to improve the network crosslinking of the polymer and further improve the peel strength upon aging.

US 2007/0054117 discloses a heat sealable adhesive paper, which is coated with a heat activated polymer dispersion and is particularly suitable for "linerless label" application. To avoid agglomeration, it is desirable that the polymer has a melting temperature greater than 104.4°C and a glass transition temperature greater than 10°C. The adhesive paper of this system requires to be sealed at high temperature and high pressure.

US 4870129A discloses an adhesive comprising an isocyanate functional group-containing crosslinking agent and a hydroxyl group-containing aqueous polyurethane dispersion, and the coating formed by the composition requires a thermal activation temperature of 40°C to 80°C.

CN112852375A discloses an aqueous two-component adhesive comprising: a component A comprising an aqueous polyurethane dispersion of more than 50% by weight and not more than 99% by weight, and a component B comprising a water-dispersible modified polyisocyanate based on hexamethylene diisocyanate of 1 % by weight to 16% by weight, the above weight percentage being based on the amount of the adhesive as 100 % by weight; wherein the aqueous polyurethane dispersion comprises a polyurethane dispersed therein, wherein the enthalpy of fusion of the polyurethane is of 3 J/g to 100 J/g which is measured by DSC from the first heating curve from 20°C to 100°C according to DIN 65467.

CN104918976B discloses a self-maintaining adhesive film comprising a solid surface-deactivated isocyanate and a first polyurethane of greater than 70% by weight with a weight average molecular weight of not greater than about 90,000 and an enthalpy of fusion of at least about 25 J/g.

CN109957370B discloses an aqueous automotive interior trim adhesive comprising 30 to 50 parts by weight of an aqueous polyurethane dispersion A, 50 to 70 parts by weight of an aqueous polyurethane dispersion B, 0.03 to 0.08 parts by weight of a defoamer, 0.1 to 0.3 part by weight of a wetting agent , 0.02 to 0.05 part by weight of a thickener, which are mixed to obtain the adhesive product. The adhesive may be used for the lamination of plastic skeletons and surface layers, such as automotive interior door panels and instrument panels, and may be used in pre-coating processes.

CN104673172B discloses a temperature-sensitive aqueous polyurethane adhesive, which is obtained by reacting a crystalline polyester diol with an aliphatic isocyanate and introducing a hydrophilic component and an epoxy resin. The adhesive has a switch temperature (Ts) in an application temperature range. The adhesion strength of the adhesive shows temperature response characteristics around the switching temperature. The adhesive has good adhesion to electronic devices below the switching temperature. The adhesion strength is significantly reduced, when it is heated above the switch temperature, allowing the electronic devices to be easily removed.

US 2021/269670 discloses a yellowing-resistant composition for coatings and adhesives, comprising a polyurethane polymer, an organic antioxidant, and a chelating agent. The polyurethane polymer is formed from a reaction mixture including a polyisocyanate, a polyester polyol, and optionally other components like emulsifiers and solvents. The composition aims to improve yellowing resistance, particularly under high-temperature conditions, and can be used in various applications such as coatings for substrates and bonding materials.

Summary of the invention

The object of the present invention is to provide an adhesive composition, the preparation and use thereof, and an article obtained by bonding with the composition.

The adhesive composition of the present invention comprises an aqueous anionic polyurethane dispersion and a uretdione group-containing polyisocyanate, wherein the aqueous anionic polyurethane dispersion comprises a polyurethane polymer and water, and wherein the polyurethane polymer is obtained by the reaction of a system comprising the following components:

a) a polyisocyanate;
b) an isocyanate reactive group-containing compound including a polyester polyol, wherein the polyester polyol is in an amount of greater than 10% by weight, relative to the total weight of the isocyanate reactive group-containing compound; and
c) a chelating agent in an amount of 0.01% to 1.95% by weight, relative to the total weight of solid constituents of the composition;

wherein the uretdione group content of the polyisocyanate is 0.8% by weight to 20% by weight, relative to the total weight of solid constituents of the aqueous polyurethane dispersion and the polyisocyanate; the enthalpy of fusion of the polyurethane polymer is greater than 15 J/g, or the enthalpy of fusion of the composition is greater than 15 J/g after film forming by drying, which is measured by DSC from the first heating curve from 20°C to 100°C according to DIN 65467.

According to one aspect of the present invention, provided is a method for preparing the adhesive composition of the present invention, comprising the step of: mixing the aqueous anionic polyurethane dispersion and the uretdione group-containing polyisocyanate in any desired manner.

According to another aspect of the present invention, provided is use of the adhesive composition of the present invention for preparing an article.

According to yet another aspect of the present invention, provided is an article comprising a substrate and a coating formed by applying the adhesive composition of the present invention onto the substrate.

According to still another aspect of the present invention, provided is a method for producing a bonded article, comprising the steps of

i. applying the adhesive composition of the present invention onto at least one surface of a substrate;
ii. thermally activating the surface of the substrate treated in step i; and
iii. bring the surface of the substrate treated in step ii into contact with the substrate itself or a surface of an additional substrate to obtain the bonded article.

The article bonded with the adhesive of the present invention has good adhesion and is not prone to adhesive failure in an environment with high temperature and high humidity.

**Embodiments**

The present invention provides an adhesive composition comprising an aqueous anionic polyurethane dispersion and a uretdione group-containing polyisocyanate, wherein the aqueous polyurethane dispersion comprises a polyurethane polymer and water, and wherein the polyurethane polymer is obtained by the reaction of a system comprising the following components: a) a polyisocyanate; b) an isocyanate reactive group-containing compound including a polyester polyol, wherein the polyester polyol is in an amount of greater than 10% by weight, relative to the total weight of the isocyanate reactive group-containing compound; and c) a chelating agent in an amount of 0.01% to 1.95% by weight, relative to the total weight of solid constituents of the composition; wherein the uretdione group content of the polyisocyanate is 0.8% by weight to 20% by weight, relative to the total weight of solid constituents of the aqueous polyurethane dispersion and the polyisocyanate; the enthalpy of fusion of the polyurethane polymer is greater than 15 J/g, or the enthalpy of fusion of the composition is greater than 15 J/g after film forming by drying, which is measured by DSC from the first heating curve from 20°C to 100°C according to DIN 65467. The present invention further provides a preparation method and use of the adhesive composition, and an article obtained by bonding with the adhesive composition.

The term "adhesive" used herein refers to a chemical material that can be applied onto the surface of an object by a variety of processes, form a coating on the object itself or on the surface of one object and another object, and bond the object itself or the surface of one object to that of another object, which is also used as a synonym for adhesive agent and/or sealant and/or bonding agent.

The term "polyurethane" used herein refers to a polyurethane urea and/or a polyurethane polyurea and/or a polyurea and/or a polythiourethane.

The term "aqueous polyurethane dispersion" as used herein refers to an aqueous polyurethane urea dispersion and/or an aqueous polyurethane polyurea dispersion and/or an aqueous polyurea dispersion and/or an aqueous polythiourethane dispersion.

The term "solid constituents" as used herein refers to solid contents or effective constituents.

Adhesive composition

The adhesive composition is a two-component system. The aqueous anionic polyurethane dispersion and the uretdione group-containing polyisocyanate are preferably stored in separate containers. The two separated components are mixed when it is desired to apply the adhesive composition onto a substrate. They are applied onto the substrate, wherein the reactive compounds in the two components react to form an adhesive coating.

The weight ratio of the aqueous anionic polyurethane dispersion to the uretdione group-containing polyisocyanate is preferably of 100:0.8 to 100:10.

Aqueous anionic polyurethane dispersion

The enthalpy of fusion of the polyurethane contained in the aqueous anionic polyurethane dispersion is preferably greater than 15 J/g, which is measured by DSC from the first heating curve from 20°C to 100°C according to DIN 65467.

The enthalpy of fusion of the polymer contained in the aqueous anionic polyurethane dispersion is most preferably 25 J/g to 100 J/g, which is measured by DSC from the first heating curve from 20°C to 100°C according to DIN 65467.

The enthalpy of fusion of the adhesive composition is preferably greater than 15 J/g after film forming by drying, which is measured by DSC from the first heating curve from 20°C to 100°C according to DIN 65467.

The enthalpy of fusion of the adhesive composition is most preferably 25 J/g to 100 J/g after film forming by drying, which is measured by DSC from the first heating curve from 20°C to 100°C according to DIN 65467.

The solid content of the aqueous anionic polyurethane dispersion is preferably of 30% by weight to 60% by weight, most preferably 45% by weight to 55% by weight, relative to the total weight of the aqueous anionic polyurethane dispersion.

The amount of the organic solvent remaining in the aqueous polyurethane dispersion is preferably less than 1.0% by weight, relative to the total weight of solid constituents of the aqueous polyurethane dispersion.

The aqueous polyurethane dispersion may be directly added to the adhesive composition in the form of a dispersion, or may be added to the adhesive composition in the form of the polyurethane and water, which are mixed to form the dispersion.

The aqueous polyurethane dispersion is preferably in an amount of 90% by weight to 99% by weight, relative to the total weight of the composition.

Polyisocyanate

The polyisocyanate has a functionality of preferably not less than 2, and most preferably 2 to 4.

The polyisocyanate is preferably one or more of aliphatic polyisocyanate, cycloaliphatic polyisocyanate, and derivatives thereof having iminooxadiazinedione, isocyanurate, uretdione, carbamate, allophanate, biuret, urea, oxadiazinetrione, oxazolidinone, acylurea and/or carbodiimide group.

The aliphatic polyisocyanate is preferably one or more of 1,6-hexamethylene diisocyanate, 2,2-dimethylpentamethylene diisocyanate, 2,2,4-trimethylhexamethylene diisocyanate, butene diisocyanate, 1,3-butadiene-1,4-diisocyanate, 2,4,4-trimethyl 1,6-hexamethylene diisocyanate, 1,6,11-undecane triisocyanate, 1,3,6-hexamethylene triisocyanate, 1,8-diisocyanato-4-isocyanatatomethyl octane, bis(isocyanatoethyl) carbonate, bis(isocyanatatoethyl)ether, methyl lysinate diisocyanate, lysine triisocyanate, bis(isocyanatatomethyl) sulfide, bis(isocyanatatoethyl) sulfide, bis(isocyanatopropyl) sulfide, bis(isocyanatohexyl) sulfide, bis(isocyanatomethyl)sulfone, bis(isocyanatomethyl)disulfide, bis(isocyanatoethyl)disulfide, bis(isocyanatopropyl) disulfide, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-thiolane, 1,2,3-tris(isocyanatomethylthio)propane, 1,2,3-tris(isocyanatoethylthio) propane, 3,5-dithia-1,2,6,7-heptane tetraisocyanate, 2,6-diisocyanatomethyl-3,5-dithia-1,7-heptane diisocyanate, 2,5-diisocyanatomethylthiophene, isocyanatoethylthio-2,6-dithia-1,8-octane diisocyanate, thiobis(3-isothiocyanatopropane), thiobis(2-isothiocyanatoethane) and dithiobis(2-isothiocyanatoethane) and hexamethylene diisocyanate, most preferably hexamethylene diisocyanate.

The cycloaliphatic polyisocyanate is preferably one or more of 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, isophorone diisocyanate, 2,5-diisocyanatotetrahydrothiophene, 2,5-diisocyanatomethyltetrahydrothiophene, 3,4-diisocyanatomethyltetrahydrothiophene, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiolane, 4,5-diisocyanatomethyl-2-methyl-1,3-dithiolane, norbornane diisocyanate (NBDI), xylylene diisocyanate (XDI), hydrogenated xylylene diisocyanate (H6XDI), 1,4-cyclohexyldiisocyanate (H$_6$PPDI), 1,5-pentamethylene diisocyanate (PDI), m-tetramethyl xylylene diisocyanate (M-TMXDI) and cyclohexane diisothiocyanate, most preferably isophorone diisocyanate.

The polyisocyanate may also have an isocyanate group and an isothiocyanate group, such as 1-isocyanato-6-isothiocyanato hexane, 1-isocyanato-4-isothiocyanato cyclohexane, 1-isocyanato-4-isothiocyanato benzene, 4-methyl-3-isocyanato-1-isothiocyanato benzene, 2-isocyanato-4,6-diisothiocyanato-1,3,5-triazine, 4-isocyanatophenyl-4-isothiocyanatophenyl sulfide and 2-isocyanatoethyl-2-isothiocyanatoethyl disulfide.

The polyisocyanate may also be halogen substituted products of the above-mentioned polyisocyanates, such as chlorine substituted products, bromine substituted products, alkyl substituted products, alkoxy substituted products, nitro substituted products or silane substituted products, such as isocyanatopropyl triethoxysilane or isocyanatopropyl trimethoxysilane.

The polyisocyanate is most preferably one or more of hexamethylene diisocyanate and isophorone diisocyanate.

The polyisocyanate is in an amount of 5% by weight to 20% by weight, most preferably 5% by weight to 15% by weight, relative to the total weight of the system.

Isocyanate reactive group-containing compound including a polyester polyol

The isocyanate reactive group-containing compound is in an amount of 10% by weight to 94% by weight, most preferably 80% by weight to 94% by weight, relative to the total weight of the system.

The hydroxyl number of the polyester polyol is preferably 20 to 80, most preferably 45 to 70.

The enthalpy of fusion of the polyester polyol is preferably at least 3 J/g, more preferably 3 J/g to 100 J/g, most preferably 50 J/g to 100 J/g, which is measured by DSC from the first heating curve from 20°C to 100°C according to DIN 65467.

The number average molecular weight of the polyester polyol is preferably 1500g/mol to 2500g/mol, which is measured by gel chromatography..

The polyester polyol is preferably one or more of linear polyester polyols, slightly branched polyester polyols, and homopolymers or mixed polymers of lactones.

The linear polyester polyols or the lightly branched polyester polyols are prepared by the following components: aliphatic, cycloaliphatic or aromatic di- or polycarboxylic acids, such as succinic acid, methylsuccinic acid, glutaric acid, adipic acid, pimelic acid, suberic acid, azelaic acid, sebacic acid, nonanedicarboxylic acid, decanedicarboxylic acid, terephthalic acid, isophthalic acid, phthalic acid, tetrahydrophthalic acid, hexahydrophthalic acid, cyclohexanedicarboxylic acid, maleic acid, fumaric acid, malonic acid or trimellitic acid; acid anhydrides, such as phthalic anhydride, trimellitic anhydride or succinic anhydride or mixtures thereof; and low molecular weight polyols, and optionally higher functional polyols, such as trimethylolpropane, glycerol or pentaerythritol, cycloaliphatic and/or aromatic di- and polyhydroxy compounds.

The homopolymers or mixed polymers of lactones are preferably obtained by addition of lactones or lactone mixtures such as butyrolactone, ε-caprolactone and/or methyl-ε-caprolactone onto suitable di- and/or or higher functional starting molecules. The ε-caprolactone is preferably a polymer of ε-caprolactone.

The polyester polyol is preferably one or more of polyesterdiols of 1,6-hexanediol, neopentyl glycol and adipic acid, and 1,4-butanediol polyadipate diol.

The polyester polyol is preferably in an amount of 50% by weight to 100% by weight, most preferably 80% by weight to 100% by weight, relative to the total weight of the isocyanate reactive group-containing compound.

Chelating agent

The term chelating agent herein refers to a compound capable of forming a stable complex with metal ions, especially heavy metal ions or transition metal ions.

The chelating agent is preferably present in the form of a chelating agent salt, a chelating agent acid or a chelating agent ester, most preferably in the form of a chelating agent salt.

The chelating agent salt is preferably a water-soluble chelating agent salt.

The solubility of the water-soluble chelating agent salt in water is preferably not less than 0.15g/100g of water, more preferably not less than 1g/100g of water, most preferably 1g/100g of water to 100g/100g of water, which is measured at room temperature of 20°C.

The water-soluble chelating agent salt preferably meets the following condition: the pH value is greater than 5, preferably greater than 6, more preferably greater than 9, most preferably 9.5 to 11, when the content of the water-soluble chelating agent salt is $4.3*10^{-7}$ mol/g in the aqueous solution of the water-soluble chelating agent salt.

The water-soluble chelating agent salt is preferably one or more of ethylenediaminetetraacetates, tartrates, citrates, pyrophosphates, tripolyphosphates, hexametaphosphates and gluconates.

The water-soluble chelating agent salt is preferably one or more of monovalent cation salts and polyvalent cation salts. The content of the water-soluble monovalent cation salt of the chelating agent is preferably not less than 45% by weight, based on the amount of the water-soluble chelating agent salt as 100% by weight.

The water-soluble monovalent cation salt of the chelating agent is preferably one or more of ethylenediaminetetraacetic acid monovalent cation salts, tartaric acid monovalent cation salts, citric acid monovalent cation salts, pyrophosphoric acid monovalent cation salts, tripolyphosphoric acid monovalent cation salts, hexametaphosphoric acid monovalent cation salts, aminotrimethylenephosphonic acid monovalent cation salts, ethylenediaminetetramethylenephosphonic acid monovalent cation salts, diethylenetriaminepentamethylenephosphonic acid monovalent cation salts and gluconic acid monovalent cation salts, more preferably one or more of ethylenediaminetetraacetic acid monovalent cation salts, tartaric acid monovalent cation salts, citric acid monovalent cation salts, pyrophosphoric acid monovalent cation salts, tripolyphosphoric acid monovalent cation salts, hexametaphosphoric acid monovalent cation salts and gluconic acid monovalent cation salts, most preferably one or more of ethylenediaminetetraacetic acid monovalent cation salts and pyrophosphoric acid monovalent cation salts.

The ethylenediaminetetraacetic acid monovalent cation salt is preferably one or more of disodium ethylenediaminetetraacetate, trisodium ethylenediaminetetraacetate, tetrasodium ethylenediaminetetraacetate, diammonium ethylenediaminetetraacetate, dipotassium ethylenediaminetetraacetate and tetrapotassium ethylenediaminetetraacetate, most preferably one or more of tetrasodium ethylenediaminetetraacetate and tetrapotassium ethylenediaminetetraacetate.

The tartaric acid monovalent cation salt is preferably sodium potassium tartrate.

The citric acid monovalent cation salt is preferably triammonium citrate.

The pyrophosphoric acid monovalent cation salt is preferably tetrasodium pyrophosphate.

The water-soluble polyvalent cation salt of the chelating agent is preferably one or more of magnesium pyrophosphate, magnesium citrate, calcium gluconate, magnesium gluconate and magnesium tartrate.

The content of the water-soluble polyvalent cation salt of the chelating agent is preferably less than 70% by weight, based on the amount of the water-soluble chelating agent salt as 100% by weight.

The water-soluble monovalent cation salt of the chelating agent and the water-soluble polyvalent cation salt of the chelating agent may be added as separate compounds, or as a mixed salt comprising a water-soluble monovalent cation salt of the chelating agent and a water-soluble polyvalent cation salt of the chelating agent, such as disodium magnesium ethylenediaminetetraacetate and disodium calcium ethylenediaminetetraacetate. When added as a mixed salt, the content of the water-soluble monovalent cation salt of the chelating agent is calculated as follows: $\Sigma$ molar mass of the monovalent cation * number of the monovalent cation/($\Sigma$ molar mass of the polyvalent cation * number of the polyvalent cation + $\Sigma$ molar mass of the monovalent cation * number of the monovalent cation). For example, the content of the water-soluble monovalent salt of disodium magnesium ethylenediaminetetraacetic acid is calculated as follows: 23*2/(23*2+24) = 65.7%.

The water-soluble chelating agent salt is most preferably one or more of tetrasodium ethylenediaminetetraacetate, tetrapotassium ethylenediaminetetraacetate and tetrasodium pyrophosphate.

The chelating agent is preferably in an amount of 0.01% by weight to 1% by weight, most preferably 0.05% by weight to 1% by weight, relative to the total weight of solid constituents of the composition.

Uretdione group-containing polyisocyanate

The uretdione group-containing polyisocyanate is preferably a uretdione group-containing aliphatic polyisocyanate, most preferably a uretdione-containing polyisocyanate based on hexamethylene diisocyanate.

The uretdione group content of the uretdione group-containing polyisocyanate is preferably in an amount of 0.8% by weight to 15% by weight, most preferably 0.9% by weight to 11% by weight, relative to the total weight of solid constituents of the aqueous polyurethane dispersion and the polyisocyanate.

The weight of the uretdione group of the polyisocyanate = moles of the uretdione group of the polyisocyanate $\times$ molecular weight of the uretdione group of the polyisocyanate, wherein the moles of the uretdione group of the polyisocyanate may be measured by NMR.

The solid content of the uretdione group-containing polyisocyanate is preferably 80% by weight to 100% by weight, most preferably 100% by weight, relative to the total weight of the uretdione group-containing polyisocyanate, which is measured using HS153 moisture analyzer from Mettler Toledo Company according to DIN-EN ISO 3251.

The isocyanate group content of the uretdione group-containing polyisocyanate is preferably 10% by weight to 30% by weight, relative to the total weight of the uretdione group-containing polyisocyanate, which is measured by volume according to DIN-EN ISO 11909.

The viscosity of the uretdione group-containing polyisocyanate is preferably 100 mPa·s to 10000 mPa·s, most preferably 100 mPa·s to 450 mPa·s, which is measured at test temperature of 23°C and shear rate of 10s$^{-1}$ with a rotor of MV-DIN according to DIN EN ISO 3219/A.3.

For the preparation method of the uretdione group-containing polyisocyanate, reference may be made to Example 1 of EP0377177.

Additive

The adhesive composition may further comprise an additive.

The additive is preferably one or more of EVA resins, pigments and fillers, organic light stabilizers, free radical blockers, dispersants, leveling agents, wetting agents, thickeners, defoamers, adhesion promoters, microbicides, stabilizers, inhibitors, catalysts and solvents.

Preparation of adhesive composition

The aqueous polyurethane dispersion is preferably obtained by the reaction comprising the following steps:

A. reacting some or all of the polyisocyanate and the isocyanate reactive group-containing compound including a polyester polyol to obtain a prepolymer, wherein the reaction is carried out in the presence of an optional organic solvent that is water-miscible but inert to isocyanate group, or an optional organic solvent that is water-miscible but inert to isocyanate group is added after the reaction to dissolve the prepolymer;
B. reacting the prepolymer, the polyisocyanate not added in step A, and the isocyanate reactive group-containing compound not added in step A to obtain the polyurethane; and
C. introducing water before, during or after step B for dispersing; and
D. obtaining the aqueous polyurethane dispersion by adding a chelating agent.

All processes known in the prior art may be used to prepare the aqueous polyurethane dispersion of the present invention, such as emulsifier/shear method, acetone method, prepolymer mixing method, melt emulsification method, ketimine method and solid spontaneous dispersion method or methods derived therefrom, preferably melt emulsification method or acetone method, and most preferably acetone method. These methods are summarized in Methoden der organischen Chemie (Houben-Weyl, Erweiterungs- und Folgebände zur 4.Auflage, Volume E20, H Bartl and J.Falbe, Stuttgart, New York, Thieme1987, p.1671-1682).

The mixing sequence of the components of the system for preparing the aqueous polyurethane dispersion may be in a conventional manner.

The polyisocyanate and the isocyanate reactive group-containing compound including a polyester polyol may be added in one or more portions, and may be identical to or different from those previously added.

The organic solvent present in the aqueous polyurethane dispersion may be removed by distillation. The organic solvent may be removed during, or after the formation of the polyurethane.

Article

The article is preferably selected from automotive interiors, food packaging, furniture and footwear.

Method for producing a bonded article

The thermal activation temperature is preferably from room temperature to 110°C, more preferably 40°C to 100°C, and most preferably 50°C to 80°C.

The substrate is preferably one or more of wood, plastic, metal, glass, textile, alloy, fabric, artificial leather, paper, cardboard, EVA, rubber, real leather, glass fiber, ethylene vinyl acetate copolymer, polyolefin, thermoplastic polyurethane, polyurethane foam, polymer fiber and graphite fiber.

Thermal activation may be heated by an oven, a drying tunnel or by infrared radiation.

The application may be applying the composition onto the entire surface of the substrate or only to one or more parts of the surface of the substrate.

The application may be brushing, dipping, spraying, roller coating, knife coating, flow coating, casting, printing or transfer printing, preferably brushing, dipping or spraying.

The bringing into contact is preferably carried out before the temperature of the substrate surface falls below a temperature, at which the adhesive composition is able to bond.

The additional substrate may be any one that needs to be bonded.

The additional substrate may be identical to or may be different from said substrate.

The additional substrate is preferably coated and heat treated in a same way as for said substrate.

**Examples**

Unless defined otherwise, all technical and scientific terms used herein have the same meaning as commonly understood by those skilled in the art. When the definition of a term in this specification conflicts with the meanings commonly understood by those skilled in the art, the definition described herein shall prevail.

Unless indicated otherwise, all numbers expressing quantities of ingredients, reaction conditions and the like used in the specification and claims are to be understood as being modified by the wording "about". Accordingly, the numerical parameters set forth herein are approximations that can vary depending upon the desired properties to be obtained, unless indicated to the contrary.

The wording "and/or" used herein refers to one or all of the cited elements.

The wordings "include" and "comprise" used herein cover the presence of the mentioned elements alone and the presence of other elements not mentioned in addition to the mentioned elements.

All percentages in the present invention are weight percentage, unless otherwise stated.

The analysis and measurement in the present invention are performed at 23°C, unless otherwise stated.

Unless otherwise indicated, the wordings "a", "an", and "the" used herein are intended to include "at least one" or "one or more". For example, the wording "a component" refers to one or more components, so that more than one component may be considered and may be adopted or used in the implementation of the embodiments.

If the raw materials in the examples of the present invention and the comparative examples are aqueous emulsions or aqueous solutions, the weight is that including water.

The solid content of the aqueous polyurethane dispersion is measured using HS153 moisture analyzer from Mettler Toledo according to DIN-EN ISO 3251.

The solid content of the polyisocyanate is measured using HS153 moisture analyzer from Mettler Toledo according to DIN-EN ISO 3251.

The viscosity of the polyisocyanate is tested at test temperature of 23°C and shear rate of $10s^{-1}$ with a rotor of MV-DIN according to DIN EN ISO 3219/A.3.

The isocyanate group (NCO) content is determined by volume according to DIN-EN ISO 11909. The measured data include free and potentially free NCO content.

The enthalpy of fusion of the polymer is measured by DSC from the first heating curve from 20°C to 100°C according to DIN 65467.

The enthalpy of fusion of the polymer after film forming by drying is measured by DSC from the first heating curve from 20°C to 100°C according to DIN 65467.

**Raw materials and agents**

Polyester I: 1,4-butanediol polyadipate diol, with a hydroxyl number of 50, melting temperature of 49°C, enthalpy of fusion of 91.0 J/g, and a number average molecular weight of 2323 g/mol, commercially available from Covestro, Germany.

Polyester II: polyester diol composed of 1,6-hexanediol, neopentyl glycol and adipic acid, with a hydroxyl number of 66, enthalpy of fusion of 55 J/g, and a number average molecular weight of 1691 g/mol, commercially available from Covestro, Germany.

Desmodur® H: 1,6-hexamethylene diisocyanate, commercially available from Covestro. Desmodur® I: isophorone diisocyanate, commercially available from Covestro.

Dispercoll U42: aqueous polyurethane dispersion, with enthalpy of fusion of 0.4 J/g, and solid content of 50% by weight, commercially available from Covestro.

Dispercoll U42 Plus: aqueous polyurethane dispersion, with enthalpy of fusion of 0.4 J/g, and solid content of 50% by weight, commercially available from Covestro.

Dispercoll U66: aqueous polyurethane dispersion, with enthalpy of fusion of 5.3 J/g, and solid content of 48% by weight, commercially available from Covestro.

Desmodur DN: aliphatic polyisocyanate containing NCO group, with solid content of 100% by weight, isocyanate group content of 21.8% by weight, viscosity of 1250 mPa·s, and the uretdione group of the polyisocyanate in an amount of 0% by weight in the polyisocyanate, commercially available from Covestro.

Desmodur N3300: aliphatic polyisocyanate containing NCO group, with solid content of 100% by weight, isocyanate group content of 21.8% by weight, viscosity of 3000 mPa·s, and the uretdione group of the polyisocyanate in an amount of 0% by weight in the polyisocyanate, commercially available from Covestro.

Desmodur N3600: aliphatic polyisocyanate containing NCO group, with solid content of 100% by weight, isocyanate group content of 23% by weight, viscosity of 1200 mPa·s, and the uretdione group of the polyisocyanate in an amount of 0% by weight in the polyisocyanate, commercially available from Covestro.

Desmodur N3900: aliphatic polyisocyanate containing NCO group, with solid content of 100% by weight, isocyanate group content of 23.5% by weight, viscosity of 730 mPa·s, and the uretdione group of the polyisocyanate in an amount of 0% by weight in the polyisocyanate, commercially available from Covestro.

Desmodur N31100: aliphatic polyisocyanate containing NCO group, HDI allophanate, with solid content of 100% by weight, isocyanate group content of 20% by weight, viscosity of 500 mPa·s, and the uretdione group of the polyisocyanate in an amount of 0% by weight in the polyisocyanate, commercially available from Covestro.

Bayhydur 3100: hydrophilically modified polyisocyanate containing NCO group, with solid content of 100% by weight, isocyanate group content of 17.4% by weight, viscosity of 2800 mPa·s, and the uretdione group of the polyisocyanate in an amount of 0% by weight in the polyisocyanate, commercially available from Covestro.

Bayhydur XP 2655: hydrophilically modified polyisocyanate containing NCO group, with solid content of 100% by weight, isocyanate group content of 20.8% by weight, viscosity of 3500 mPa·s, and the uretdione group of the polyisocyanate in an amount of 0% by weight in the polyisocyanate, commercially available from Covestro.

Bayhydur 2547: hydrophilically modified polyisocyanate containing NCO group, with solid content of 100% by weight, isocyanate group content of 22.5% by weight, viscosity of 650 mPa·s, and the uretdione group of the polyisocyanate in an amount of 11.6% by weight in the polyisocyanate, commercially available from Covestro.

Aqueous sodium pyrophosphate solution: with a pH value of 9.89, when the sodium pyrophosphate content is $4.3 \times 10^{-7}$ mol/g, and the solubility measured at room temperature of 20°C of 6.2g/100g, commercially available from Sinopharm Chemical Reagent Co., Ltd.

AAS: sodium N-(2-aminoethyl)-2-aminoethanesulfonate, $NH_2\text{-}CH_2CH_2\text{-}NH\text{-}CH_2CH_2\text{-}SO_3Na$, 45% in water, commercially available from Covestro AG, Germany.

Emulsifier FD®: fatty alcohol poly(ethylene glycol/propylene glycol) ether, external emulsifier, commercially available from Lanxess, Germany.

N,N-diethylurea: stabilizer, commercially available from TCI Chemicals.

1,3-butanediol: cocatalyst, commercially available from TCI Chemicals.

Tri-n-butylphosphine: catalyst, commercially available from TCI Chemicals.

Methyl p-toluenesulfonate: commercially available from TCI Chemicals.

Surfynol 420: surfactant, commercially available from Evonik.

Borchi Gel L75N: thickener, as a transparent liquid with a concentration of 25%, commercially available from Borchers Company.

Preparation of aqueous polyurethane dispersions

Aqueous polyurethane dispersion 1

563.5g of polyester I and 57.4g of polyester II were dehydrated at 110°C and 15 mbar for 1 hour. Then, 3.5g of 1,4-butanediol were added and cooled while stirring. 55.7g of Desmodur®H were added at 60°C, then 30.4g of Desmodur® I were added, and stirred at 80°C to 90°C until reaching an isocyanate content of 1.3 %. It was then dissolved in 1121g of acetone and cooled to 50°C to obtain a reaction solution. A solution of 10.9g AAS and 2.9g of dihydroxyethylamine in 80g water was added to the reaction solution and stirred vigorously for 30 minutes. Then, 669g of water were added for dispersing. Subsequently, acetone was distilled off. After the acetone content was less than 1%, 6g of Emulsifier FD® were added, stirred well or shaken well to obtain the aqueous polyurethane dispersion 1 with solid content of 50% by weight and enthalpy of fusion of 43.0 J/g.

Aqueous polyurethane dispersion 2

563.5g of polyester I and 57.4g of polyester II were dehydrated at 110°C and 15 mbar for 1 hour. Then, 3.5g of 1,4-butanediol were added and cooled while stirring. 55.7g of Desmodur®H were added at 60°C, then 30.4g of Desmodur® I were added, and stirred at 80°C to 90°C until reaching an isocyanate content of 1.3 %. It was then dissolved in 1121g of acetone and cooled to 50°C to obtain a reaction solution. A solution of 10.9g of AAS and 2.9g of dihydroxyethylamine in 80g water was added to the reaction solution and stirred vigorously for 30 minutes. Then, 669g water were added for dispersing. Subsequently, acetone was distilled off. After the acetone content was less than 1%, 6g of Emulsifier FD® were added. Then, 0.75 g of sodium pyrophosphate was mixed with the resulting product, stirred well or shaken well to obtain the aqueous polyurethane dispersion 2 with solid content of 50.1% by weight and enthalpy of fusion of 43.0 J/g.

Aqueous polyurethane dispersion 3

563.5g of polyester I and 57.4g of polyester II were dehydrated at 110° C and 15 mbar for 1 hour. Then, 3.5g of 1,4-butanediol were added and cooled while stirring. 55.7g of Desmodur®H were added at 60°C, then 30.4g of Desmodur® I were added, and stirred at 80°C to 90°C until reaching an isocyanate content of 1.3 %. It was then dissolved in 1121g of acetone and cooled to 50°C to obtain a reaction solution. A solution of 10.9g of AAS and 6.1g of dihydroxyethylamine in 80g water was added to the reaction solution and stirred vigorously for 30 minutes, then 669g of water were added for dispersing. Subsequently, acetone was distilled off. After the acetone content was less than 1%, 6g of Emulsifier FD® were added. 0.75 g of sodium pyrophosphate was mixed with the resulting product, stirred well or shaken well to obtain the aqueous polyurethane dispersion 3 with solid content of 50.0% by weight and enthalpy of fusion of 45.4 J/g.

Method for preparing uretdione group-containing polyisocyanate 1

2 g of N,N-diethylurea, 10 g of 1,3-butanediol and 3 g of tri-n-butylphosphine were successively added to a reactor comprising 1000 g of Desmodur®H at room temperature under the protection of dry nitrogen. The mixture was then heated to 60°C. After reacting for 4 hours, 2.8 g of methyl p-toluenesulfonate were added when the NCO content of the reactant was 40.4% by weight, in order to terminate the reaction. It was further heated to 80° C for 1 hour. Then, a colorless aliphatic polyisocyanate 1 containing uretdione group was obtained by thin-film distillation at a temperature of 130° C and a pressure of 0.15 mbar, which had solid content of 100% by weight, NCO content of 21.4% by weight, and viscosity of 185 mPa·s, and the uretdione group of the polyisocyanate in an amount of 63% by weight in the polyisocyanate.

Preparation of the adhesive compositions of examples and comparative examples

According to the compositions shown in table 1, the aqueous polyester polyurethane dispersion was charged into a vessel. The vessel was placed under the disperser. Surfynol 420 and Brochi Gel L75N (pre-mixed with deionized water at a ratio of 1:1) were added successively under a dispersing state. Then, it was dispersed at 500 to 800 rpm (1 to 1.6 m/s) for 10 to 15 minutes. Subsequently, polyisocyanate was added and it was dispersed at 500 to 800 rpm (1 to 1.6 m/s) for 10 to 15 minutes. An adhesive composition was obtained by dispersing the above components sufficiently.

Test for the peel strength after 7 days

The adhesive composition was applied on ABS and PVC (with fabric backing) using a 100μm wire rod with an application weight of 50 g/m$^2$(dry weight) respectively. The ABS coated with adhesive was placed in an oven at 50°C to dry for 10 to 15 minutes, and then placed in an oven at 85°C for activation for 2 minutes. Immediately afterwards, the ABS was taken out and attached to the PVC coated with adhesive. The attached sample strip was put into a molding machine with the parameter setting: temperature of 140 °C, pressure of 1 bar, pressing time of 10 seconds and speed of 300mm/min. After the sample strip was left at room temperature for 7 days, it was subjected to a 180-degree peel test with a Zwick material testing machine at a peel speed of 300 mm/min. When the measured peel strength was greater than 2.5 N/mm, the composition had qualified peel strength after 7 days, which means that the composition had good adhesion. When the measured peel strength was not greater than 2.5 N/mm, the composition had unqualified peel strength after 7 days.

Test for the peel strength after 480 hours

The adhesive composition was applied on ABS and PVC (with fabric backing) using a 100μm wire rod with an application weight of 50 g/m$^2$(dry weight) respectively. The ABS coated with adhesive was placed in an oven at 50°C to dry for 10 to 15 minutes, and then placed in an oven at 85°C for activation for 2 minutes. Immediately afterwards, the ABS was taken out and attached to the PVC coated with adhesive. The attached sample strip was put into a molding machine with parameter setting: temperature of 140 °C, pressure of 1 bar, pressing time of 10 seconds. After the sample strip was left at room temperature for 7 days, it was placed in an aging circulation box with high temperature and high humidity for 480 hours, wherein the aging condition was set to a temperature of 80 °C and a relative humidity of 95%. After 480 hours, the sample strip was taken out and left at room temperature for 1 hour. Then, it was subjected to a 180-degree peel test with a Zwick material testing machine at a peel speed of 300 mm/min. If the measured peel strength was greater than 1.1 N/mm, the composition had qualified peel strength after 480 hours, which means that the composition had good high temperature resistance and aging resistance. When the measured peel strength was not greater than 1.1 N/mm, the composition had unqualified peel strength after 480 hours.

The composition and the test results of peel strength of the adhesive compositions of examples 1 to 3 and comparative examples 1 to 3 are listed in table 1. The composition and the test results of peel strength of the adhesive compositions of example 4 and comparative examples 4 to 10 are listed in table 2. The composition and the test results of peel strength of the adhesive compositions of examples 5 to 8 and comparative examples 11 to 16 are listed in table 3. The composition and the test results of peel strength of the adhesive compositions of examples 9 to 13 and comparative examples 17 to 21 are listed in table 3.

Table 1 Composition and test results of performance of the adhesive compositions of Examples 1 to 3 and Comparative Examples 1 to 3

| | Comp. Ex. 1 | Comp. Ex. 2 | Ex. 1 | Ex. 2 | Ex. 3 | Comp. Ex. 3 |
|---|---|---|---|---|---|---|
| Com position of the adhesive compositions | | | | | | |
| Aqueous polyurethane dispersion | Dispercoll U42 | Dispercoll U42 Plus | Aqueous polyurethane dispersion 1 | Aqueous polyurethane dispersion 2 | Aqueous polyurethane dispersion 3 | Dispercoll U66 |
| Weight of the aqueous polyurethane dispersion/g | 100 | 100 | 100 | 100 | 100 | 100 |
| Polyisocyanate | Uretdione group-containing polyisocyanate 1 | | | | | |
| Weight of the polyisocyanate/g | 7 | 7 | 7 | 7 | 7 | 7 |
| Uretdione group con-tent of the polyiso-cyanate/ % by weight | 7.74 | 7.73 | 7.74 | 7.73 | 7.73 | 8.02 |
| Test results of performance | | | | | | |
| Peel Strength (7 days) N/mm | 0.65 | 1.06 | 3.55 | 2.63 | 3.71 | 3.56 |
| Peel Strength (480 hours)/ N/mm | 0.50 | 0.43 | 1.26 | 1.33 | 1.63 | 0.60 |

Remarks: The uretdione group content of the polyisocyanate = (weight of the uretdione group of polyisocyanate/ (weight of solid constituents of aqueous polyurethane dispersion + polyisocyanate)) $\times$ 100%

The sample strips bonded by adhesive compositions of the inventive examples 1 to 3 had good peel strength after 7 days and peel strength after 480 hours, which indicates that the adhesives of the examples had good adhesion performance and high temperature resistance and aging resistance.

The enthalpy of fusion of the aqueous polyurethane dispersions contained in the adhesive compositions of comparative examples 1 to 3 was less than 15 J/g. The compositions could not have both adhesion performance and high temperature resistance and aging resistance.

Table 2 Composition and test results of performance of the adhesive compositions of Example 4 and Comparative Examples 4 to 10

| | Comp. Ex. 4 | Comp. Ex. 5 | Comp. Ex. 6 | Comp. Ex. 7 | Ex. 4 | Comp. Ex. 8 | Comp. Ex. 9 | Comp. Ex. 10 |
|---|---|---|---|---|---|---|---|---|
| Composition of the adhesive compositions | | | | | | | | |
| Aqueous polyurethane dispersion | Aqueous polyurethane dispersion 3 | | | | | | | |
| Weight of the aqueous polyurethane dispersion/g | 100 | 100 | 100 | 100 | 100 | 100 | 100 | 100 |
| Polyisocyanate | Desmodur DN | Desmodur N3300 | Desmodur N3600 | Desmodur N3900 | Polyisocyanate 1 | Bayhydur 3100 | Bayhydur XP 2655 | Desmodur N31100 |
| Weight of the polyisocyanate/g | 7 | 7 | 7 | 7 | 7 | 7 | 7 | 7 |
| Uretdione group content of the polyisocyanate / % by weight | 0 | 0 | 0 | 0 | 7.73 | 0 | 0 | 0 |
| Test results of performance | | | | | | | | |
| Peel Strength (7 days) N/mm | 3.95 | 3.38 | 3.54 | 3.64 | 3.71 | 4.65 | 3.75 | 3.32 |
| Peel Strength (480 hours) N/mm | 0.98 | 0.85 | 0.88 | 0.87 | 1.63 | 0.67 | 0.89 | 1.01 |

Remarks: The uretdione group content of the polyisocyanate = (weight of the uretdione group of polyisocyanate/ (weight of solid constituents of aqueous polyurethane dispersion + polyisocyanate)) × 100%

The sample strip bonded by the adhesive composition of the inventive example 4 had good peel strength after 7 days and peel strength after 480 hours, which indicates that the adhesive of the example had good adhesion performance and high temperature resistance and aging resistance.

The polyisocyanates of comparative examples 4 to 10 had uretdione group content of less than 0.8% by weight. The compositions had poor high temperature resistance and aging resistance.

Table 3 Composition and test results of performance of the adhesive compositions of Examples 5 to 8 and Comparative Examples 11 to 16

| | Comp. Ex. 11 | Ex. 5 | Comp. Ex. 12 | Comp. Ex. 13 | Comp. Ex. 14 | Comp. Ex. 15 | Comp . Ex. 16 | Ex. 6 | Ex. 7 | Ex. 8 |
|---|---|---|---|---|---|---|---|---|---|---|
| Composition of the adhesive compositions | | | | | | | | | | |
| Aqueous polyurethane dispersion | Aqueous polyurethane dispersion 3 | | | | | | | | | |
| Weight of the aqueous polyurethane dispersion/g | 100 | 100 | 100 | 100 | 100 | 100 | 100 | 100 | 100 | 100 |
| Polyisocyanate | - | Weight ratio of Desmodur N3600/polyi socyanate 1 = 25:75 | Weight ratio of Desmodur N3600/polyisocyanate 1 = 50:50 | | | | | | Weight ratio of Desmodur N3600/polyisoc yanate 1 = 75:25 | Bayhydur 2547 |
| Weight of the polyisocyanate/g | 0 | 7 | 0.2 | 0.4 | 0.6 | 0.8 | 1 | 7 | 7 | 7 |
| Uretdione group content of the polyisocyanate / % by weight | 0 | 5.8 | 0.13 | 0.25 | 0.37 | 0.5 | 0.62 | 3.87 | 1.93 | 1.43 |
| Test results of performance | | | | | | | | | | |
| Peel Strength (7 days)/ N/mm | 1.71 | 3.22 | 3.43 | 3.67 | 4.73 | 4.35 | 4.06 | 3.99 | 3.63 | 3.77 |
| Peel Strength (480 hours)/ N/mm | 0.07 | 1.42 | 0.03 | 0.04 | 0.06 | 0.11 | 0.19 | 1.25 | 1.16 | 1.21 |

Remarks: The uretdione group content of the polyisocyanate = (weight of the uretdione group of polyisocyanate/ (weight of solid constituents of aqueous polyurethane dispersion + polyisocyanate)) $\times$ 100%

The sample strips bonded by the adhesive compositions of the inventive examples 5 to 8 had good peel strength after 7 days and peel strength after 480 hours, which indicates that the adhesive of the example had good adhesion performance and high temperature resistance and aging resistance.

The polyisocyanates of comparative examples 11 to 6 had uretdione group content of 0%, 0.13%, 0.25 %, 0.37%, 0.5% and 0.62% by weight. The compositions had poor high temperature resistance and aging resistance.

Table 4 Composition and test results of performance of the adhesive compositions of Examples 9 to 13 and Comparative Examples 17 to 21

| | Comp. Ex. 17 | Comp. Ex. 18 | Comp. Ex. 19 | Ex. 9 | Ex. 10 | Ex. 11 | Ex. 12 | Ex. 13 | Comp. Ex. 20 | Comp. Ex. 21 |
|---|---|---|---|---|---|---|---|---|---|---|
| Composition of the adhesive compositions | | | | | | | | | | |
| Aqueous polyurethane dispersion | Aqueous polyurethane dispersion 3 | | | | | | | | | |
| Weight of the aqueous polyur-ethane disper-sion/g | 100 | 100 | 100 | 100 | 100 | 100 | 100 | 100 | 100 | 100 |
| Polyisocyanate | Polyisocyanate 1 | | | | | | | | | |
| Weight of the polyisocyanate/g | 0.2 | 0.4 | 0.6 | 0.8 | 1 | 3 | 5 | 10 | 30 | 50 |
| Uretdione group content of the polyisocyanate /% by weight | 0.25 | 0.50 | 0.75 | 0.99 | 1.23 | 3.56 | 5.72 | 10.50 | 23.62 | 31.49 |
| Test results of performance | | | | | | | | | | |
| Peel Strength (7 days) N/mm | 3.83 | 3.94 | 5.03 | 5.27 | 3.57 | 4.08 | 3.46 | 3.80 | NA | NA |
| Peel Strength (480 hours)/ N/mm | 0.04 | 0.04 | 0.41 | 1.89 | 1.33 | 1.71 | 2.42 | 3.78 | NA | NA |
| Remarks: NA means that the ABS and PVC coated with the adhesives could not be bonded during the preparation of the sample strips, thus the peel strength could not be tested. The uretdione group content of the polyisocyanate = (weight of the uretdione group of polyisocyanate/(weight of solid constituents of aqueous polyurethane dispersion + polyisocyanate)) $\times$ 100% | | | | | | | | | | |

The sample strips bonded by the adhesive compositions of the inventive examples 9 to 13 had good peel strength after 7 days and peel strength after 480 hours, which indicates that the adhesive of the example had good adhesion performance and high temperature resistance and aging resistance.

The polyisocyanates of comparative examples 17 to 21 had uretdione group content of 0.25%, 0.5%, 0.75%, 23.62% and 31.49% by weight. The compositions had poor high temperature resistance and aging resistance or could not be bonded.

**Claims**

1.   An adhesive composition comprising an aqueous anionic polyurethane dispersion and a uretdione group-containing polyisocyanate, wherein the aqueous polyurethane dispersion comprises a polyurethane polymer and water, and wherein the polyurethane polymer is obtained by the reaction of a system comprising the following components:

a) a polyisocyanate;

b) an isocyanate reactive group-containing compound including a polyester polyol, wherein the polyester polyol is in an amount of greater than 10% by weight, relative to the total weight of the isocyanate reactive group-containing compound; and

c) a chelating agent in an amount of 0.01% to 1.95% by weight, relative to the total weight of solid constituents of the composition;

wherein the uretdione group content of the polyisocyanate is 0.8% by weight to 20% by weight, relative to the total weight of solid constituents of the aqueous polyurethane dispersion and the polyisocyanate; the enthalpy of fusion of the polyurethane polymer is greater than 15 J/g, or the enthalpy of fusion of the composition is greater than 15 J/g after film forming by drying, which is measured by DSC from the first heating curve from 20°C to 100°C according to DIN 65467.

2. The adhesive composition according to claim 1, **characterized in that** the enthalpy of fusion of the isocyanate reactive group-containing compound is greater than 15 J/g, most preferably 25 J/g to 100 J/g, which is measured by DSC from the first heating curve from 20°C to 100°C according to DIN 65467.

3. The adhesive composition according to claim 1 or 2, **characterized in that** the enthalpy of fusion of the polyurethane polymer is 25 J/g to 100 J/g, or the enthalpy of fusion of the composition is 25 J/g to 100 J/g after film forming by drying, which is measured by DSC from the first heating curve from 20°C to 100°C according to DIN 65467.

4. The adhesive composition according to any one of claims 1 to 3, **characterized in that** the chelating agent is in an amount of 0.01% by weight to 1% by weight, most preferably 0.05% by weight to 1% by weight, relative to the total weight of solid constituents of the composition.

5. The adhesive composition according to any one of claims 1 to 4, **characterized in that** the uretdione group-containing polyisocyanate is a uretdione group-containing aliphatic polyisocyanate, most preferably a uretdione-containing polyisocyanate based on hexamethylene diisocyanate.

6. A method for preparing the adhesive composition according to any one of claims 1 to 5, comprising the step of: mixing the aqueous anionic polyurethane dispersion and the uretdione group-containing polyisocyanate in any desired manner.

7. Use of the adhesive composition according to any one of claims 1 to 5 for preparing an article.

8. The use according to claim 7, **characterized in that** the article is selected from automotive interiors, food packaging, furniture and footwear.

9. An article comprising a substrate and a coating formed by applying the adhesive composition according to any one of claims 1 to 5 onto the substrate.

10. A method for producing a bonded article, comprising the steps of

i. applying the adhesive composition according to any one of claims 1 to 5 onto at least one surface of a substrate;

ii. thermally activating the surface of the substrate treated in step i; and

iii. bring the surface of the substrate treated in step ii into contact with the substrate itself or a surface of an additional substrate to obtain the bonded article.

11. The method according to claim 10, **characterized in that** the thermal activating temperature is from room temperature to 110°C, more preferably 40°C to 100°C, and most preferably 50°C to 80°C.

12. The method according to claim 10, **characterized in that** the substrate is one or more of wood, plastic, metal, glass, textile, alloy, fabric, artificial leather, paper, cardboard, EVA, rubber, real leather, glass fiber, ethylene vinyl acetate copolymer, polyolefin, thermoplastic polyurethane, polyurethane foam, polymer fiber and graphite fiber.

**Patentansprüche**

1. Klebstoffzusammensetzung, umfassend eine wässrige anionische Polyurethandispersion und ein Uretdiongruppe enthaltendes Polyisocyanat, wobei die wässrige Polyurethandispersion ein Polyurethanpolymer und Wasser umfasst, und wobei das Polyurethanpolymer durch die Reaktion eines Systems erhalten wird, das die folgenden Komponenten umfasst:

   a) ein Polyisocyanat;
   b) eine isocyanatreaktive Gruppe enthaltende Verbindung, die ein Polyesterpolyol einschließt, wobei das Polyesterpolyol in einer Menge von mehr als 10 Gew.-% vorhanden ist, bezogen auf das Gesamtgewicht der isocyanatreaktive Gruppe enthaltenden Verbindung, und
   c) einen Chelatbildner in einer Menge von 0,01 Gew.-% bis 1,95 Gew.-%, bezogen auf das Gesamtgewicht der festen Bestandteile der Zusammensetzung;

   wobei der Uretdiongruppengehalt des Polyisocyanats 0,8 Gew.-% bis 20 Gew.-% beträgt, bezogen auf das Gesamtgewicht der festen Bestandteile der wässrigen Polyurethandispersion und des Polyisocyanats; wobei die Schmelzenthalpie des Polyurethanpolymers größer als 15 J/g ist, oder die Schmelzenthalpie der Zusammensetzung größer als 15 J/g nach Filmbildung durch Trocknung ist, gemessen durch DSC aus der ersten Heizkurve von 20 °C bis 100 °C nach DIN 65467.

2. Klebstoffzusammensetzung nach Anspruch 1, **dadurch gekennzeichnet, dass** die Schmelzenthalpie der isocyanatreaktive Gruppe enthaltenden Verbindung größer als 15 J/g, am meisten bevorzugt 25 J/g bis 100 J/g ist, gemessen durch DSC aus der ersten Heizkurve von 20 °C bis 100 °C nach DIN 65467.

3. Klebstoffzusammensetzung nach Anspruch 1 oder 2, **dadurch gekennzeichnet, dass** die Schmelzenthalpie des Polyurethanpolymers 25 J/g bis 100 J/g beträgt, oder die Schmelzenthalpie der Zusammensetzung 25 J/g bis 100 J/g nach Filmbildung durch Trocknung beträgt, gemessen mittels DSC aus der ersten Heizkurve von 20 °C bis 100 °C nach DIN 65467.

4. Klebstoffzusammensetzung nach einem der Ansprüche 1 bis 3, **dadurch gekennzeichnet, dass** der Chelatbildner in einer Menge von 0,01 Gew.-% bis 1 Gew.-%, am meisten bevorzugt 0,05 Gew.-% bis 1 Gew.-% vorhanden ist, bezogen auf das Gesamtgewicht der festen Bestandteile der Zusammensetzung.

5. Klebstoffzusammensetzung nach einem der Ansprüche 1 bis 4, **dadurch gekennzeichnet, dass** das Uretdiongruppe enthaltende Polyisocyanat ein Uretdiongruppe enthaltendes aliphatisches Polyisocyanat ist, am meisten bevorzugt ein Uretdion-enthaltendes Polyisocyanat auf Basis von Hexamethylendiisocyanat.

6. Verfahren zur Herstellung der Klebstoffzusammensetzung nach einem der Ansprüche 1 bis 5, umfassend den Schritt: Mischen der wässrigen anionischen Polyurethandispersion und des Uretdiongruppe enthaltenden Polyisocyanats in beliebiger Weise.

7. Verwendung der Klebstoffzusammensetzung nach einem der Ansprüche 1 bis 5 zur Herstellung eines Artikels.

8. Verwendung nach Anspruch 7, **dadurch gekennzeichnet, dass** der Artikel ausgewählt ist aus Automobilinnenausstattung, Lebensmittelverpackungen, Möbeln und Schuhen.

9. Artikel, umfassend ein Substrat und eine Beschichtung, die durch Aufbringen der Klebstoffzusammensetzung nach einem der Ansprüche 1 bis 5 auf das Substrat gebildet wird.

10. Verfahren zur Produktion eines gebondeten Artikels, umfassend die Schritte:

    i. Aufbringen der Klebstoffzusammensetzung nach einem der Ansprüche 1 bis 5 auf mindestens eine Oberfläche eines Substrats;
    ii. thermisches Aktivieren der Oberfläche des in Schritt i behandelten Substrats; und
    iii. In-Kontakt-bringen der Oberfläche des in Schritt ii behandelten Substrats mit dem Substrat selbst oder mit einer Oberfläche eines zusätzlichen Substrats, um den gebondeten Artikel zu erhalten.

11. Verfahren nach Anspruch 10, **dadurch gekennzeichnet, dass** die thermische Aktivierungstemperatur von Raumtemperatur bis 110 °C, bevorzugter 40 °C bis 100 °C und am meisten bevorzugt 50 °C bis 80 °C beträgt

12. Verfahren nach Anspruch 10, **dadurch gekennzeichnet, dass** das Substrat ein oder mehrere von Holz, Kunststoff, Metall, Glas, Textil, Legierung, Stoff, Kunstleder, Papier, Karton, EVA, Kautschuk, Echtleder, Glasfaser, Ethylen-Vinylacetat-Copolymer, Polyolefin, thermoplastischem Polyurethan, Polyurethanschaumstoff, Polymerfaser und Graphitfaser ist.

**Revendications**

1. Composition d'adhésif comprenant une dispersion aqueuse de polyuréthanne anionique et un polyisocyanate contenant un groupe uretdione, dans laquelle la dispersion aqueuse de polyuréthanne comprend un polymère de polyuréthanne et de l'eau, et dans laquelle le polymère de polyuréthanne est obtenu par la réaction d'un système comprenant les composants suivants :

   a) un polyisocyanate ;
   b) un composé contenant un groupe réactif envers un isocyanate comprenant un polyester polyol, dans laquelle le polyester polyol est présent en une quantité supérieure à 10 % en poids, par rapport au poids total du composé contenant un groupe réactif envers un isocyanate ; et
   c) un agent chélatant en une quantité de 0,01 à 1,95 % en poids, par rapport au poids total de constituants solides de la composition ;
   dans laquelle la teneur en groupes uretdione du polyisocyanate est de 0,8 % en poids à 20 % en poids, par rapport au poids total des constituants solides de la dispersion aqueuse de polyuréthane et du polyisocyanate ;
   l'enthalpie de fusion du polymère de polyuréthanne est supérieure à 15 J/g, ou l'enthalpie de fusion de la composition est supérieure à 15 J/g après formation de film par séchage, ce qui est mesuré par DSC à partir de la première courbe de chauffage de 20 °C à 100°C selon la norme DIN 65467.

2. Composition d'adhésif selon la revendication 1, **caractérisée en ce que** l'enthalpie de fusion du composé contenant un groupe réactif envers un isocyanate est supérieure à 15 J/g, de préférence de 25 J/g à 100 J/g, qui est mesurée par DSC à partir de la première courbe de chauffage de 20 °C à 100°C selon la norme DIN 65467.

3. Composition d'adhésif selon la revendication 1 ou 2, **caractérisée en ce que** l'enthalpie de fusion du polymère de polyuréthanne est de 25 J/g à 100 J/g, ou l'enthalpie de fusion de la composition est de 25 J/g à 100 J/g après formation de film par séchage, qui est mesurée par DSC à partir de la première courbe de chauffage de 20 °C à 100 °C selon la norme DIN 65467.

4. Composition d'adhésif selon l'une quelconque des revendications 1 à 3, **caractérisée en ce que** l'agent chélatant est présent en une quantité de 0,01 % en poids à 1 % en poids, le plus préférablement 0,05 % en poids à 1 % en poids, par rapport au total de constituants solides de la composition.

5. Composition d'adhésif selon l'une quelconque des revendications 1 à 4, **caractérisée en ce que** le polyisocyanate contenant un groupe uretdione est un polyisocyanate aliphatique contenant un groupe uretdione, de manière particulièrement préférée un polyisocyanate contenant une uretdione à base de diisocyanate d'hexaméthylène.

6. Procédé de préparation de la composition d'adhésif selon l'une quelconque des revendications 1 à 5, comprenant l'étape de : mélange de la dispersion aqueuse de polyuréthanne anionique et du polyisocyanate contenant un groupe uretdione de n'importe quelle manière souhaitée.

7. Utilisation de la composition d'adhésif selon l'une quelconque des revendications 1 à 5 pour la préparation d'un article.

8. Utilisation selon la revendication 7, **caractérisée en ce que** l'article est choisi parmi les intérieurs d'automobiles, les emballages alimentaires, les meubles et les chaussures.

9. Article comprenant un substrat et un revêtement formé par application de la composition d'adhésif selon l'une quelconque des revendications 1 à 5 sur le substrat.

10. Procédé de production d'un article lié, comprenant les étapes de

i. application de la composition d'adhésif selon l'une quelconque des revendications 1 à 5 sur au moins une surface d'un substrat ;

ii. activation thermique de la surface du substrat traité à l'étape i ; et

iii. mise en contact de la surface du substrat traité à l'étape ii avec le substrat lui-même ou une surface d'un substrat additionnel pour obtenir l'article lié.

11. Procédé selon la revendication 10, **caractérisé en ce que** la température d'activation thermique est de la température ambiante à 110 °C, plus préférablement 40 °C à 100 °C, et le plus préférablement 50 °C à 80 °C.

12. Procédé selon la relégation 10, **caractérisé en ce que** le substrat est l'un ou plusieurs parmi bois, plastique, métal, verre, textile, alliage, tissu, cuir artificiel, papier, carton, EVA, caoutchouc, cuir véritable, fibre de verre, copolymère éthylène acétate de vinyle, polyoléfine, polyuréthane thermoplastique, mousse de polyuréthane, fibre de polymère et fibre de graphite.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070054117 A
- US 4870129 A
- CN 112852375 A
- CN 104918976 B
- CN 109957370 B
- CN 104673172 B
- US 2021269670 A
- EP 0377177 A

### Non-patent literature cited in the description

- Erweiterungs- und Folgebände. **HOUBEN-WEYL** ; **H BARTL** ; **J.FALBE**. Methoden der organischen Chemie. Thieme, 1987, vol. E20, 1671-1682